# EUROPÄISCHE PATENTANMELDUNG

(11) **EP 1 532 903 A1**
(43) Veröffentlichungstag der Anmeldung: **25.05.2005**
(21) Anmeldenummer: 03405829.7
(22) Anmeldetag: 20.11.2003
(51) Int. Cl.: A47J 31/40

(54) **Extraktionsvorrichtung zur Erzeugung von Kaffee für eine Kaffeemaschine**

(71) Anmelder: Steiner AG Weggis, 6353 Weggis (CH)
(72) Erfinder: Comte, Philippe, 1976 Daillon (CH)
(74) Vertreter: Luchs, Willi

(57) **Zusammenfassung**

Eine Extraktionsvorrichtung zur Erzeugung von Kaffee für eine Kaffeemaschine ist mit einem Brühzylinder (2) für die Aufnahme von Kaffeepulver versehen, der in seiner Achsrichtung in Zusammenwirkung mit einer Antriebsvorrichtung (4) zwischen vorbestimmten Stellungen hin und her verstellbar ist. In diesem Brühzylinder (2) sind zwei koaxial relativ zueinander verstellbare Kolben (31, 32) geführt. Der Brühzylinder (2) ist hierbei in zwei Zylinderteile (20, 22) aufgeteilt, von denen der eine den durch die Antriebsvorrichtung (4) verstellbaren Brühzylinderteil (20) bildet und der andere Zylinderteil (22) an dem durch den ersten Kolben (31) verschliessbaren Ende des Brühzylinders (2) angeordnet und mit der Einfüllöffnung (24) zum Einfüllen des Kaffeepulvers versehen ist. Dadurch kann die Baulänge dieser Extraktionsvorrichtung gekürzt werden.

## Beschreibung

Die Erfindung betrifft eine Extraktionsvorrichtung zur Erzeugung von Kaffee für eine Kaffeemaschine gemäss dem Oberbegriff des nachfolgenden Anspruches 1.

Eine gattungsbildende Extraktionsvorrichtung ist in der EP-B-0 299 399 offenbart. Sie umfasst einen in Zusammenwirkung mit einer Antriebsvorrichtung entlang einer Längsführung zwischen vorbestimmten Stellungen hin und her verstellbaren Brühzylinder zur Aufnahme von Kaffeepulver sowie zwei zum Brühzylinder koaxiale, relativ zueinander verstellbare Kolben. Das Kaffeepulver wird durch eine seitliche Einfüllöffnung des Brühzylinders eingefüllt, wobei ein stirnseitig offenes Ende des Brühzylinders durch einen der beiden Kolben, den im wesentlichen feststehenden ersten Kolben, geschlossen gehalten wird. Beim Verstellen des Brühzylinders in der einen Richtung, über den ersten Kolben, begrenzt der erste Kolben zusammen mit dem zweiten, mit dem Brühzylinder mitbewegten Kolben stirnseitig eine Brühkammer und sorgt für das Verdichten des eingefüllten Kaffeepulvers. In dieser Stellung wird durch den einen Kolben brühendes Wasser in die Brühkammer und durch den verdichteten Kaffeepulver gepumpt und danach der erzeugte Kaffee durch den anderen Kolben zu einem Auslass der Kaffeemaschine befördert. Beim anschliessenden Verstellen des Brühzylinders in der anderen Richtung wird das verbrauchte Kaffeepulver durch den zweiten Kolben aus dem inzwischen vom ersten Kolben freigegebenen Brühzylinder-Ende ausgestossen.

Der vorliegenden Erfindung liegt die Aufgabe zugrunde, die an sich bewährte Extraktionsvorrichtung der eingangs genannten Art noch weiter zu verbessern und platzsparender zu gestalten.

Diese Aufgabe wird erfindungsgemäss durch eine Extraktionsvorrichtung mit den Merkmalen des Anspruches 1 gelöst.

Weitere bevorzugte Ausgestaltungen der erfindungsgemässen Extraktionsvorrichtung bilden den Gegenstand der abhängigen Ansprüche.

Mit der erfindungsgemässen Aufteilung des Brühzylinders in zwei entlang der Längsführung geführte Zylinderteile, von denen der eine den eigentlichen, die Brühkammer umschliessenden und durch die Antriebsvorrichtung verstellbaren Brühzylinderteil bildet und der andere Zylinderteil an dem durch den ersten Kolben verschliessbaren Ende des Brühzylinders angeordnet und mit der Einfüllöffnung zum Einfüllen des Kaffeepulvers versehen ist, wobei die beiden Zylinderteile beim Verstellen des Brühzylinderteils in der einen Richtung stirnseitig aneinandergedrückt zusammenverstellt und beim Verstellen des Brühzylinderteils in der anderen Richtung voneinander getrennt werden können, so dass ein Axialspalt entsteht, durch welchen das verbrauchte Kaffeepulver herausfallen kann, kann die Länge des Brühzylinders sowie auch der zum Ausstossen des verbrauchten Kaffeepulvers notwendige Hub des zweiten Kolbens verkürzt werden, wodurch auch die Gesamtlänge der Extraktionsvorrichtung verkleinert wird. Ausserdem wird der Ausstossvorgang verkürzt, und nicht zuletzt auch das Material für die verkürzten Teile eingespart. Zudem kann der die Einfüllöffnung aufweisende, am eigentlichen Brühvorgang unbeteiligte Zylinderteil aus einem billigeren Material wie Kunststoff und in einem einfacheren Verfahren hergestellt werden als der aus rostfreiem Stahl bestehende Brühzylinder, in dem nun keine seitliche Einfüllöffnung angefertigt werden muss.

Die Erfindung wird nachfolgend anhand der Zeichnung näher erläutert. Es zeigen:
- Fig. 1: ein Ausführungsbeispiel einer erfindungsgemässen Extraktionsvorrichtung für eine Kaffeemaschine in perspektivischer Darstellung;
- Fig. 2: einen Schnitt nach Linie II - II in Fig. 3;
- Fig. 3: im Längsschnitt die Extraktionsvorrichtung nach Fig. 1 in einer Ausgangsstellung;
- Fig. 4: im Längsschnitt die Extraktionsvorrichtung nach Fig. 1 in einer Brühposition; und
- Fig. 5: im Längsschnitt die Extraktionsvorrichtung nach Fig. 1 in einer Ausstossposition.

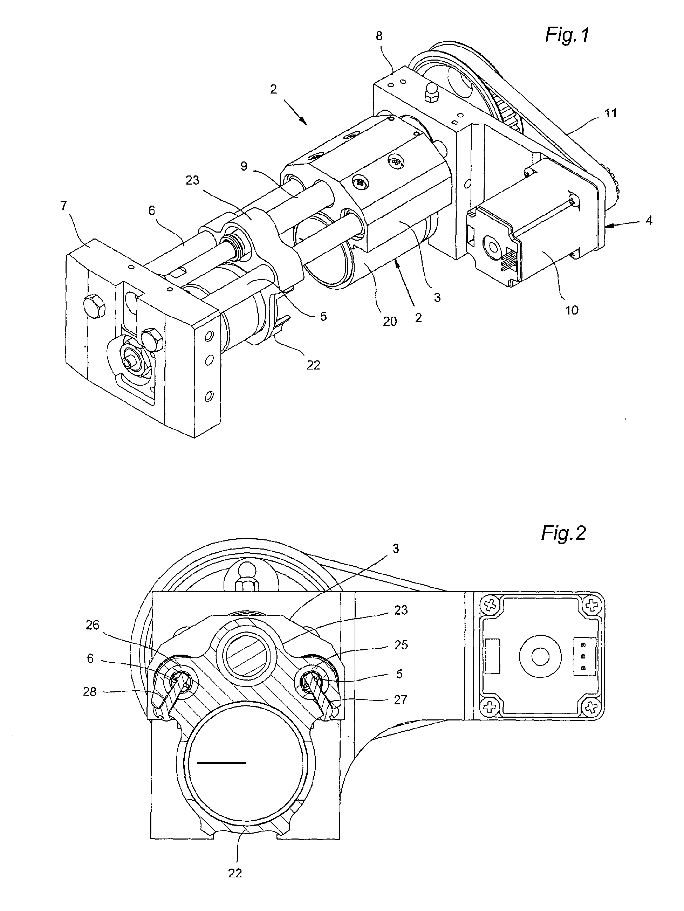

In Fig.1 bis 5 ist eine Extraktionsvorrichtung 1 zur Erzeugung von Kaffee dargestellt, die den Einsatz in einer automatischen Kaffeemaschine findet. Sie weist einen Brühzylinder 2 auf, der erfindungsgemäss in zwei axial zusammenfügbare und voneinander trennbare Zylinderteile 20, 22 aufgeteilt ist, wie weiter unten ausführlich erläutert wird. Einer dieser Teile, der rohrförmige Brühzylinderteil 20 ist an einem Schlitten 3 befestigt und wird mit diesem in Zusammenwirkung mit einer Antriebsvorrichtung 4 in seiner Achsrichtung zwischen vorbestimmten Stellungen hin und her verstellt und dabei auf zwei Führungsstangen 5, 6 geführt. Die Führungsstangen 5, 6 sind mit ihren Enden in je einem Halter 7, 8 befestigt. Die Antriebsvorrichtung 4 umfasst eine auf den Schlitten 3 einwirkende Antriebsspindel 9, die in den beiden Haltern 7, 8 drehbar gelagert ist, und die über einen Riemenantrieb 11 mit einem Antriebsmotor 10, vorzugsweise einem DC-Motor (Gleichstrommotor) in Antriebsverbindung steht. Die Achse der Antriebsspindel 9 liegt in einer Längsmittelebene der Extraktionsvorrichtung 1, die zwischen den beiden Führungsstangen 5, 6 verläuft.

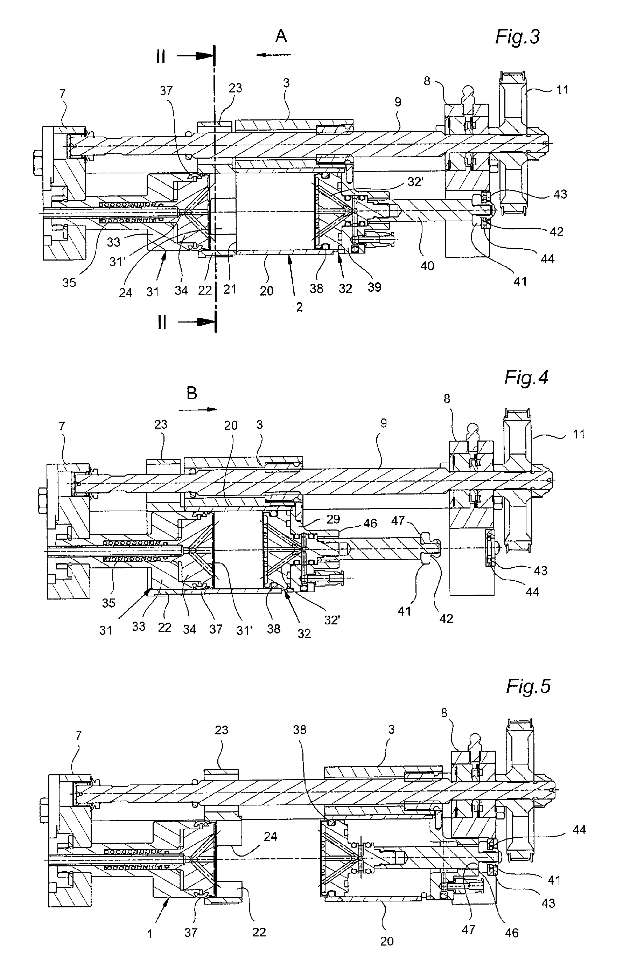

In der in Fig. 3 gezeigten Stellung des Schlittens 3 liegt an einem stirnseitig offenen Ende 21 des mit dem Schlitten 3 fest verbundenen Brühzylinderteils 20 der andere Zylinderteil 22 an, der mit einer seitlichen Einfüllöffnung 24 zum Einfüllen von Kaffeepulver in den Brühzylinder-Hohlraum versehen ist. Der Zylinderteil 22 ist mit einem Führungsteil 23 verbunden und mit diesem auf den Führungsstangen 5, 6 und lose auch über die Antriebsspindel 9 verschiebbar geführt (wird jedoch von der Antriebsspindel 9 nicht angetrieben). Auf den Führungsteil 23 wirken zwei in den Führungsstangen 5, 6 integrierte Federn 25, 26 (vgl. Fig. 2) ein, die den Führungsteil 23 an je einen zu der jeweiligen Führungsstange 5, 6 radial gerichteten und mit dieser beispielsweise verschraubten Anschlag 27, 28 drücken, und die auch in dieser Stellung die beiden Zylinderteile 22, 20 axial zusammenfügen.

Dem in seiner Achsrichtung verstellbaren Brühzylinder 2 sind zwei relativ zueinander verstellbare Kolben 31, 32 koaxial zugeordnet. Der erste, im wesentlichen feststehende Kolben 31 ist zweiteilig ausgebildet. Während ein Kolbenteil 33 ortsfest im Halter 7 befestigt ist, ist der andere Kolbenteil 34 diesem gegenüber leicht axialbeweglich und an diesem federnd abgestützt. Zwischen den beiden Kolbenteilen 33, 34 vorhandene Druckfeder 35 angeordnet. Die beiden Kolbenteile 33, 34 sind an ihrem Umfang durch eine ringförmige, einen U-förmigen Querschnitt aufweisende Dichtung 37 miteinander verbunden, die mit ihren Enden rundum an beiden Kolbenteilen 33, 34 befestigt ist. Die Druckfeder 35 ist bestrebt, die beiden Kolbenteile 33, 34 auseinander zu drücken und dabei die Dichtung 37 länglich zu dehnen. Beim Andrücken des beweglichen Kolbenteils 34 an den ortsfesten Kolbenteil 33, entgegen der Kraft der Druckfeder 35, wird die Dichtung 37 radial nach aussen gedrückt und somit in ihre dichtende Funktionsstellung gebracht. Der erste Kolben 31 verschliesst hierbei das stirnseitig offene Ende des Brühzylinders 2.

Der zweite Kolben 32 ist verschiebbar im Brühzylinderteil 20 geführt. Am Umfang dieses Kolbens 32 ist eine ringförmige Dichtung 38 vorhanden. Der zweite Kolben 32 ragt mit seiner Kolbenstange 40 aus dem Brühzylinderteil 20 hinaus, durch einen stirnseitigen Brühzylinder-Endteil 39 hindurch. Die Kolbenstange 40 ist an ihrem Ende mit einem eine Umfangsnut 42 aufweisenden Kopf 41 vorzugsweise aus Kunststoff versehen, mit dem sie in eine am Halter 8 angebrachte Halterung 43 einrastbar ist. Die Halterung 43 weist mit der Umfangsnut 42 zusammenwirkende stabförmige Federelemente 44 auf, die im wesentlichen tangential zu der Umfangsnut 42 verlaufen, und die beim Einrasten auseinanderdrückbar sind. Selbstverständlich wäre auch eine andere Rastvorrichtung denkbar. In der in Fig. 3 gezeigten Stellung befindet sich der zweite Kolben 32 beim Endteil 39 und die Kolbenstange 40 ist in der Halterung 43 eingerastet.

In der in Fig. 3 gezeigten Ausgangsstellung der Extraktionsvorrichtung 1 kann das gemahlene Kaffeepulver durch die seitliche, mit einer Kaffeemühle korrespondierende Einfüllöffnung 24 in den Brühzylinder 2 eingefüllt werden. Mit Vorteil können im Zylinderteil 22 zwei gegenüberliegende und mit je einer Mühle korrespondierende seitliche Einfüllöffnungen 24 vorgesehen sein.

Nachdem eine definierte Portion von Kaffeepulver in den durch die beiden Kolben 31, 32 und den Brühzylinder 2 begrenzten Hohlraum eingebracht wurde, wird nun der Schlitten 3 mit dem Brühzylinderteil 20 mittels der Antriebsvorrichtung 4 in Pfeilrichtung A nach Fig. 3 in Bewegung gesetzt, wobei auch der am Brühzylinderteil 20 anliegende andere Zylinderteil 22 mit dem Führungsteil 23 mitbewegt und dabei von den in den Führungsstangen 5, 6 integrierten Federn 25, 26 an den Brühzylinderteil 20 angedrückt verbleibt. Die beiden Brühzylinderteile 20, 22 werden über den ersten Kolben 31 (unter Zusammendrückung seiner beiden Kolbenteile 34, 33) in eine aus Fig. 4 ersichtliche Stellung geschoben. Vom sich in Pfeilrichtung A bewegenden Brühzylinder 2 wird aber auch der zweite Kolben 32 unter Ausrastung des Kopfes 41 aus der Halterung 43 mitgenommen und gegen den feststehenden ersten Kolben 31 bewegt. Dadurch wird der Hohlraum mit dem Kaffeepulver bis zu einem vorbestimmten Mass verkleinert und das Kaffeepulver zusammengepresst bzw. verdichtet. In dieser in Fig. 4 dargestellten Brühposition kann der eigentliche Brühvorgang durchgeführt werden, indem durch den einen Kolben (beispielsweise durch Kanäle 32' des zweiten Kolbens 32) brühendes Wasser oder Dampf in den durch Dichtungen 37, 38 abgedichteten Hohlraum und durch das Kaffeepulver gepumpt und der erzeugte Kaffee durch den anderen Kolben (beispielsweise durch Kanäle 31' des ersten Kolbens 31) zu einem aus der Zeichnung nicht ersichtlichen Auslass der Kaffeemaschine befördert wird.

Nach Beendigung des Brühvorganges wird mittels der Antriebsvorrichtung 4 der Schlitten 3 mit dem Brühzylinderteil 20 in der anderen Richtung (Pfeilrichtung B nach Fig. 4) in Bewegung gesetzt. Der mit dem Führungsteil 23 verbundene Zylinderteil 22 bleibt anfänglich an den Brühzylinderteil 20 angedrückt und wird unter Wirkung der Feder 25, 26 mit diesem zurückbewegt, bis der Führungsteil 23 an den mit den Führungsstangen 5, 6 verbundenen Anschlägen 26, 27 zur Anlage kommt. Nun wird der stehengebliebene, mit der Einfüllöffnung 24 (bzw. den Einfüllöffnungen 24) versehene Zylinderteil 22 von dem sich weiter mit dem Schlitten 3 in Pfeilrichtung B bewegenden Brühzylinderteil 20 getrennt und dadurch ein Axialspalt zwischen diesen beiden Teilen gebildet. Mit dem Brühzylinderteil 20 wird auch der zweite Kolben 32 in Pfeilrichtung B verstellt, bis der Kopf 41 wieder in die Halterung 43 einrastet. Da aber der Brühzylinderteil 20 mit dem Schlitten 3 weiter in Pfeilrichtung B zum Halter 8 hin bewegt wird, bis eine Stirnfläche 46 des Brühzylinder-Endteils 39 an einer Gegenfläche 47 des in der Halterung 43 eingerasteten Kopfes 41 zur Anlage kommt (vgl. Fig. 5), findet eine Relativbewegung zwischen dem zweiten Kolben 32 und dem Brühzylinderteil 20 statt, und die verbrauchte Kaffeeportion bzw. der Kaffeesatz wird durch den zweiten Kolben 32 aus dem Brühzylinderteil 20 in den Axialspalt zwischen den beiden Brühzylinder-Teilen 20, 22 ausgestossen und fällt in einen darunterliegenden Auffangbehälter (in der Zeichnung nicht dargestellt).

Mit der erfindungsgemässen Aufteilung des Brühzylinders 2 in zwei entlang einer Längsführung (Führungsstangen 5, 6) geführte Zylinderteile 20, 22, von denen der eine den eigentlichen, die Brühkammer umschliessenden und durch die Antriebsvorrichtung 4 verstellbaren Brühzylinderteil 20 bildet und der andere Zylinderteil 22 mit der Einfüllöffnung 24 zum Einfüllen des Kaffeepulvers versehen ist, wobei die beiden Zylinderteile 22, 20 beim Verstellen des Brühzylinderteils 20 in der einen Richtung A stirnseitig aneinandergedrückt zusammenverstellt und beim Verstellen des Brühzylinderteils 20 in der anderen Richtung B voneinander getrennt werden können, so dass ein Axialspalt entsteht, durch welchen das verbrauchte Kaffeepulver ausgestossen werden kann, kann die Länge des Brühzylinders 2 sowie auch der zum Ausstossen des verbrauchten Kaffeepulvers notwendige Hub des zweiten Kolbens 32 verkürzt werden, wodurch auch die Gesamtlänge der Extraktionsvorrichtung 1 verkleinert wird.

Ausserdem wird der Ausstossvorgang verkürzt, und nicht zuletzt auch das Material für die verkürzten Teile eingespart. Zudem kann der die Einfüllöffnung (oder Einfüllöffnungen) 24 aufweisende, am eigentlichen Brühvorgang unbeteiligte Zylinderteil 22 aus einem billigeren Material wie Kunststoff und in einem einfacheren Verfahren hergestellt werden als der aus rostfreiem Stahl bestehende Brühzylinderteil, in dem nun keine seitliche Einfüllöffnung angefertigt werden muss.

Selbstverständlich wären auch andere Ausführungsformen der erfindungsgemässen Extraktionsvorrichtung durchaus denkbar. So könnte z.B. eine Antriebsvorrichtung als in der Zeichnung dargestellt Anwendung finden.

Die Verwendung eines DC-Motors in der Art eines Schrittmotors ermöglicht eine sehr genaue und wiederholbare Positionseinstellung mit gleichbleibendem Anpressdruck, gleichbleibender Kaffeesatzportion, die ausgestossen werden muss, etc.

## Patentansprüche

1. Extraktionsvorrichtung zur Erzeugung von Kaffee für eine Kaffeemaschine, mit einem Brühzylinder (2) zur Aufnahme von Kaffeepulver, der in seiner Achsrichtung in Zusammenwirkung mit einer Antriebsvorrichtung (4) zwischen vorbestimmten Stellungen hin und her verstellbar ist, und mit zwei zum Brühzylinder (2) koaxialen, relativ zueinander verstellbaren Kolben (31, 32), von denen der erste Kolben (31) beim Einfüllen des Kaffeepulvers über eine seitliche Einfüllöffnung (24) ein offenes Ende des Brühzylinders (2) geschlossen hält, wobei der Brühzylinder (2) in eine Ausstossposition verstellbar ist, bei der das verbrauchte Kaffeepulver unter Freigabe des Brühzylinder-Endes durch den ersten Kolben (31) ausgestossen wird, **dadurch gekennzeichnet, dass**
der Brühzylinder (2) in zwei Zylinderteile (20, 22) aufgeteilt ist, von denen der eine den durch die Antriebsvorrichtung (4) verstellbaren Brühzylinderteil (20) bildet und der andere Zylinderteil (22) an dem durch den ersten Kolben (31) verschliessbaren Ende des Brühzylinders (2) angeordnet und mit der Einfüllöffnung (24) zum Einfüllen des Kaffeepulvers versehen ist, wobei Mittel vorgesehen sind, durch welche die beiden Zylinderteile (20, 22) in der Einfüllposition stirnseitig aneinandergedrückt sind, indessen sie in der voneinander getrennt sind zur Bildung eines Axialspaltes zur Entfernung des verbrauchten Kaffeepulvers.

2. Extraktionsvorrichtung nach Anspruch 1, **dadurch gekennzeichnet, dass** die Mittel zum stirnseitigen Aneinanderdrücken der beiden Zylinderteile (20, 22) durch mindestens eine Feder (25, 26) gebildet sind, wobei der mit der Einfüllöffnung (24) zum Einfüllen des Kaffeepulvers versehene Zylinderteil (22) in der einen Richtung (A) vom durch die Antriebsvorrichtung (4) verstellbaren Brühzylinderteil (20) entgegen der Kraft der Feder (25, 26) verstellbar und in der anderen Richtung (B) durch die Kraft der Feder (25, 26) bis zu einem Anschlag (27, 28) zurückbewegbar ist.

3. Extraktionsvorrichtung nach Anspruch 2, **dadurch gekennzeichnet, dass** der durch die Antriebsvorrichtung (4) verstellbare Brühzylinderteil (20) an einem auf zwei seitlichen Führungsstangen (5, 6) geführten und mittels einer Antriebsspindel (9) verstellbaren Schlitten (3) befestigt ist, wobei auch der andere Zylinderteil (22) mit einem Führungsteil (23) auf den Führungsstangen (5, 6) verschiebbar geführt ist, wobei jeder Führungsstange (5, 6) eine Feder (25, 26) zum Aneinanderdrücken der beiden Zylinderteile (20, 22) sowie ein Anschlag (27, 28) zum Anhalten des Führungsteils (23) zugeordnet sind.

4. Extraktionsvorrichtung nach einem der Ansprüche 1 bis 3, **dadurch gekennzeichnet, dass** der erste Kolben (31) zweiteilig ausgebildet und einen gegenüber einem ortsfesten Kolbenteil (33) federnd abgestützten beweglichen Kolbenteil (34) aufweist, wobei die beiden Kolbenteile (33, 34) auf ihrem Umfang durch eine im Querschnitt U-förmige, ringförmige Dichtung (37) miteinander verbunden sind und die Dichtung (37) beim Andrücken des beweglichen Kolbenteils (34) an den ortsfesten Kolbenteil (33) radial auseinanderdrückbar und somit in ihre dichtende Funktionsstellung bringbar ist.

5. Extraktionsvorrichtung nach einem der Ansprüche 1 bis 4, **dadurch gekennzeichnet, dass** der zweite Kolben (32) mit seiner aus dem Brühzylinderteil (20) hinausragenden Kolbenstange (40) in eine ortsfeste Halterung (43) einrastbar und dadurch zum sich weg vom anderen Zylinderteil (22) bewegenden Brühzylinderteil (20) relativ zum Axialspalt hin bewegbar ist.

6. Extraktionsvorrichtung nach Anspruch 5, **dadurch gekennzeichnet, dass** die Kolbenstange (40) mit einem eine Umfangsnut (42) aufweisenden Kopf (41) vorzugsweise aus Kunststoff versehen ist, mit dem sie zwischen zwei in die Umfangsnut (42) einrastbare, tangential zur Umfangsnut (42) verlaufende, stabförmige Federelemente (44) der Halterung (43) einsteckbar ist.

7. Extraktionsvorrichtung nach einem der Ansprüche 1 bis 6, **dadurch gekennzeichnet, dass** der mit der Einfüllöffnung (24) versehene Zylinderteil (22) aus Kunststoff besteht.

8. Extraktionsvorrichtung nach einem der Ansprüche 1 bis, **dadurch gekennzeichnet, dass** die Antriebsvorrichtung einen DC-Motor (Gleichstrommotor) umfasst.

9. Extraktionsvorrichtung nach einem der Ansprüche 1 bis 8, **dadurch gekennzeichnet, dass** die beiden Kolben (31, 32) Kanäle (31', 32') aufweisen, wobei über die Kanäle (31' bzw. 32') des einen Kolbens (31 bzw. 32) in die durch die Kolben (31, 32) stirnseitig begrenzte Brühkammer und in das verdichtete Kaffeepulver brühendes Wasser oder Dampf unter Druck zuführbar ist und durch die Kanäle (32' bzw. 31') des anderen Kolbens (32 bzw. 31) der erzeugte Kaffee zu einem Auslass der Kaffeemaschine förderbar ist.

10. Extraktionsvorrichtung nach einem der Ansprüche 1 bis 9, **dadurch gekennzeichnet, dass** in einer Brühposition, bei der der mit der Einfüllöffnung (24) versehene Zylinderteil (22) aus Kunststoff besteht.
